Europäisches Patentamt

European Patent Office

Office européen des brevets

(19)

(11) Numéro de publication: **0 234 154**
**B1**

(12) # FASCICULE DE BREVET EUROPEEN

(45) Date de publication du fascicule du brevet:
23.05.90

(51) Int. Cl.⁵: **G01D 1/00**, G01F 23/00

(21) Numéro de dépôt: **86402869.1**

(22) Date de dépôt: **19.12.86**

(54) Indicateur de bord pour véhicule.

(30) Priorité: **30.12.85 FR 8519396**

(43) Date de publication de la demande:
**02.09.87 Bulletin 87/36**

(45) Mention de la délivrance du brevet:
**23.05.90 Bulletin 90/21**

(84) Etats contractants désignés:
**DE ES GB IT**

(56) Documents cités:
**FR-A- 1 503 029**
**US-A- 3 813 946**

**ELECTRONICS,**
**vol. 53, no. 19, 28 août 1980, page 157, New York, US; M.**
**BOZOIAN: "Power-up relays prevent meter from pinning"**

(73) Titulaire: **JAEGER, 2, rue Baudin,**
**F-92303 Levallois-Perret(FR)**

(72) Inventeur: **Huynh, Tan Duc, 1 Passage Iphigénie Noisiel Cedex 157, F-77420 Champs Sur Marne(FR)**

(74) Mandataire: **Bloch, Gérard et al, 2, square de l'Avenue du Bois, F-75116 Paris(FR)**

## Description

La présente invention a pour objet un indicateur de bord pour véhicule, permettant le contrôle des variations lentes d'une grandeur physique affectée de variations parasites rapides, comprenant un capteur de ladite grandeur physique, à grandeur de sortie électrique, des moyens reliés audit capteur, pour afficher ladite grandeur de sortie et des moyens pour amortir les variations parasites de l'indication ainsi obtenue de ladite grandeur physique.

Un tel indicateur est utilisé, par exemple, pour indiquer le niveau du carburant dans le réservoir d'un véhicule quelconque, en particulier d'une automobile.

Dans un tel cas, il est important de pouvoir contrôler le niveau moyen dans le réservoir, dont les variations sont lentes par rapport aux variations parasites rapides provoquées par les mouvements du véhicule lors de son déplacement.

On connaît déjà de tels indicateurs de bord, dans lesquels les moyens d'affichage comprennent un appareil à aiguille du type galvanomètre à cadre mobile, et les moyens d'amortissement comprennent un dispositif d'amortissement mécanique du cadre mobile, utilisant par exemple un frottement visqueux. L'amortissement ainsi obtenu étant parfois insuffisant, on prévoit en outre, lorsque le capteur comprend un organe mécanique mobile, comme par exemple un flotteur dans le cas où la grandeur à indiquer est un niveau, un autre dispositif d'amortissement mécanique, par frottement visqueux ou par inertie, de cet organe mobile. Ces dispositifs présentent l'inconvénient suivant. Pour obtenir un amortissement suffisant des variations parasites lorsque le véhicule est en march normale, ils doivent être réglés d'une façon telle qu'il en résulte une indication fausse dans les instants qui suivent immédiatement la mise sous tension du véhicule. En effet, le cadre mobile ne peut pas se déplacer rapidement pour que l'aiguille franchisse presque instantanément la discontinuité correspondant à la mise sous tension du véhicule. De plus, les dispositifs d'amortissement visqueux ou par inertie sont d'un prix de revient relativement élevé.

La présente invention vise à pallier les inconvénients précédents.

Elle a pour objet, à cet effet, un indicateur du type défini ci-dessus, caractérisé par le fait que lesdits moyens d'amortissement comprennent un filtre électrique passe-bas, disposé entre ledit capteur et lesdits moyens d'affichage et des moyens, commandés pendant une durée déterminée après la mise sous tension du véhicule, pour augmenter la fréquence de coupure dudit filtre.

Dans l'indicateur de l'invention, il n'est pas nécessaire que les moyens d'affichage comportent en eux-mêmes un dispositif d'amortissement mécanique, car, lorsque le véhicule est en marche normale, les variations parasites sont suffisamment amorties par le filtre électrique passe-bas. Ainsi, pendant la durée déterminée qui suit la mise sous tension du véhicule, la fréquence de coupure du filtre passe-bas étant augmentée, les moyens d'affichage, non amortis en eux-mêmes, peuvent suivre rapidement la discontinuité correspondant à la mise sous tension. Pendant cette durée, le véhicule ne se déplace pas encore et les variations parasites sont très faibles, sinon nulles. Ainsi l'indicateur de l'invention procure une indication toujours exacte. De plus, il est d'un prix de revient relativement faible.

Dans une forme de réalisation préférée de l'indicateur de l'invention ledit filtre électrique passe-bas comprend une résistance et un condensateur, et lesdits moyens pour augmenter la fréquence de coupure dudit filtre comprennent un commutateur analogique monté en parallèle sur la résistance et commandé pendant un durée déterminée après la mise sous tension du véhicule, pour mettre la résistance en court circuit.

Avantageusement, ledit commutateur analogique comprend un transistor.

Avantageusement encore, il est prévu un détecteur de seuil relié à la sortie dudit filtre passe-bas, et un dispositif d'alarme relié à la sortie dudit détecteur de seuil.

Dans ce cas, il n'est plus nécessaire de prévoir un dispositif particulier pour détecter le fait que le réservoir se trouve vide, comme dans les systèmes de l'art antérieur, ce qui permet, entre autres, de supprimer l'amortissement mécanique propre à ce dispositif. Par ailleurs, l'information délivrée par le dispositif d'alarme, du fait qu'elle est élaborée à partir de la grandeur d'entrée des moyens d'affichage, est toujours en accord avec l'indication affichée.

La présente invention sera mieux comprise à l'aide de la description suivante d'une forme de réalisation d'un indicateur de bord selon l'invention, faite en se référant aux dessins annexés, sur lesquels,

- la figure 1 représente un schéma par blocs d'un indicateur de bord,
- la figure 2 représente de façon simplifiée le capteur de l'indicateur de la figure 1,
- la figure 3 représente de façon simplifiée le dispositif d'affichage de l'indicateur de la figure 1,
- la figure 4 représente le filtre passe-bas de l'indicateur de la figure 1,
- la figure 5 représente le commutateur analogique de l'indicateur de la figure 1,
- la figure 6a représente une première variante du dispositif de commande de l'indicateur de la figure 1, et,
- la figure 6b représente une deuxième variante du dispositif de commande de l'indicateur de la figure 1.

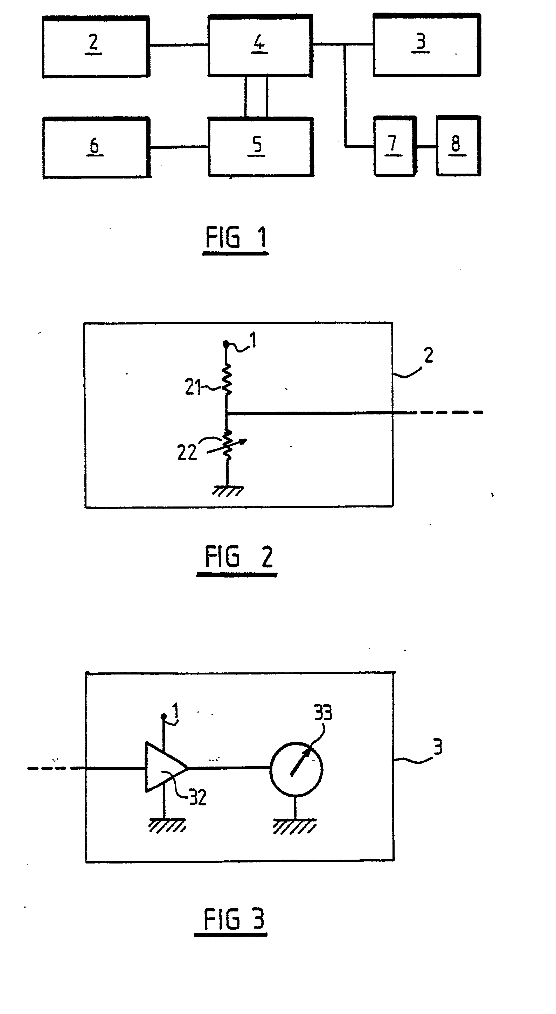

Un indicateur du niveau de carburant dans le réservoir d'un véhicule comprend, en référence à la figure 1 :
- un capteur de niveau 2, disposé dans le réservoir de carburant, dont la grandeur de sortie est ici une tension électrique,
- un filtre passe-bas 4, relié à la sortie du capteur de niveau 2,
- un dispositif d'affichage 3, relié à la sortie du filtre passe-bas 4,
- un détecteur de seuil 7, relié à la sortie du filtre passe-bas 4,

- un dispositif d'alarme 8, ici une lampe témoin, relié à la sortie du détecteur de seuil 7,
- un commutateur analogique 5, relié au filtre passe-bas 4 d'une façon décrite plus en détail ultérieurement, et,
- un dispositif de commande 6 du commutateur analogique 5.

En référence à la figure 2, le capteur de niveau 2 comprend ici un potentiomètre 22, agencé de façon connue, et donc non représentée, pour que sa résistance totale dépende du niveau de carburant dans le réservoir, par exemple à l'aide d'un flotteur solidaire de l'organe de commande du curseur du potentiomètre. Le potentiomtre 22 est monté en série avec une résistance 21 de valeur fixe, de façon à former un pont diviseur alimenté par la tension de la batterie, disponible après mise sous tension du véhicule sur une borne 1. Le point de jonction entre les résistances 21 et 22 constitue la sortie du capteur de niveau 2.

En référence à la figure 3, le dispositif d'affichage 3 comprend ici un amplificateur suiveur 32 de type connu, alimenté à partir de la borne 1, dont la sortie est reliée à un appareil à cadre mobile 33. De façon connue l'amplificateur suiveur permet de donner une très grande impédance d'entrée au dispositif d'affichage 3.

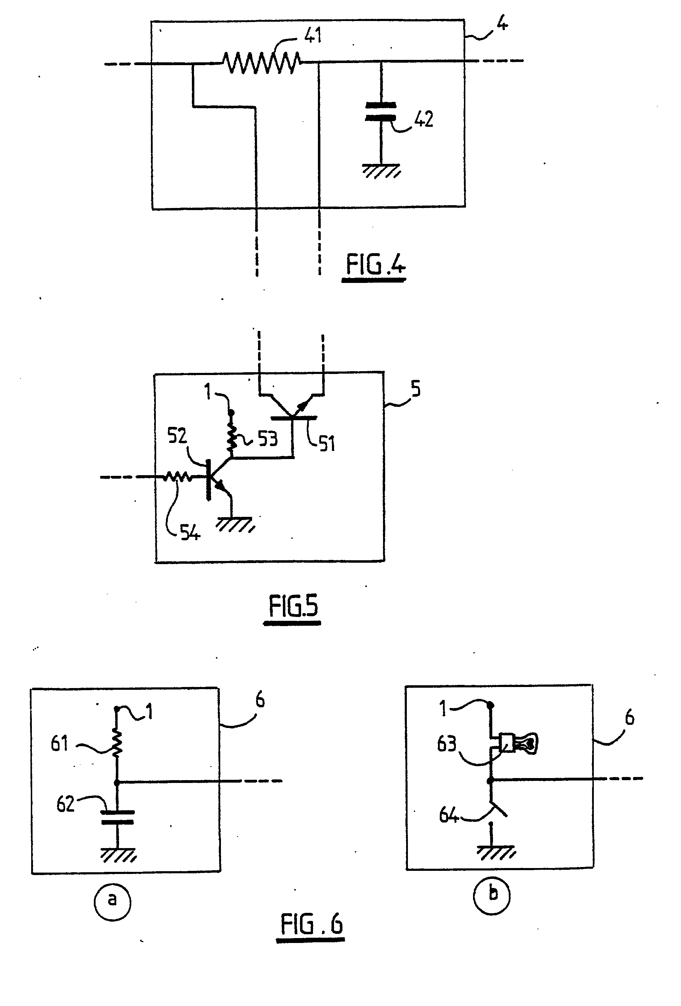

En référence à la figure 4, le filtre passe-bas 4 est du type connu comprenant une résistance 41 en série et un condensateur 42 en shunt. Les deux bornes de la résistance 41 sont reliées au commutateur analogique 5 de la façon maintenant décrite.

En référence à la figure 5, le commutateur analogique 5 comprend ici un premier transistor bipolaire NPN 51, dont l'émetteur est relié à la borne de la résistance 41 connectée au condensateur 42, et le collecteur à l'autre borne de la résistance 41. La base du transistor 51 est reliée au collecteur d'un deuxième transistor bipolaire NPN 52, alimenté à partir de la borne 1 par une résistance 53. L'émetteur du transistor NPN est relié à la masse et sa base est reliée, par l'intermédiaire d'une résistance 54 à une entrée de commande du commutateur analogique 5.

En référence à la figure 6a, l'entrée de commande du commutateur analogique 5 est reliée au point de jonction entre une résistance 61 et un condensateur 62 montés en série pour constituer un temporisateur de type connu, la résistance 61 étant reliée à la borne 1 et le condensateur 62 étant relié à la masse.

En référence à la figure 6b, une variante de réalisation de la commande du commutateur analogique 5 est présentée, dans le cas fréquent où le moteur du véhicule, lubrifié par huile, est pourvu d'un contacteur 64, ou "manocontact", commandé par le manomètre de pression d'huile. Ce manocontact 64 est en général disposé en série avec une lampe témoin 63, l'ensemble étant alimenté à partir de la borne 1. Le manocontact 64 reste fermé pendant un certain temps après la mise sous tension du véhicule et s'ouvre ensuite. Dans un tel cas, il est possible de relier directement l'entrée de commande du commutateur analogique 5 au point de jonction entre le manocontact 64 et la lampe témoin 63.

L'indicateur qui vient d'être décrit fonctionne de la façon suivante. Dès que le véhicule est sous tension, la borne 1 est portée à un potentiel d'ici 12 volts, et l'ensemble des circuits est alimenté. Dans le cas de la figure 6a, comme dans celui de la figure 6b, la tension d'entrée du commutateur analogique 5 est à un niveau nul ou très proche de zéro, pour une durée qui dépend de la constante de temps du temporisateur de la figure 6a ou du temps au bout duquel la pression d'huile ouvre le manocontact, dans le cas de la figure 6b. Tant que la tension d'entrée du commutateur analogique 5 est à un niveau faible, la tension de sortie de l'inverseur constitué par le transistor 52 et les résistances 53 et 54 reste voisine de la tension sur la borne 1, c'est-à-dire 12 volts. Alors le transistor 51 est saturé et la résistance 41 se trouve donc cout-circuitée. Dans ce cas, la fréquence de coupure du filtre passe-bas 4 se trouve rejetée à une valeur très élevée, suffisante pour permettre au filtre de transmettre la brusque discontinuité de tension en sortie du capteur 2 correspondant à la mise sous tension. Le dispositif d'affichage 2, non amorti, peut suivre cette variation et affiche donc presque instantanément une valeur exacte.

Après une durée déterminée, le condensateur 62 est assez chargé, ou le manocontact 64 est ouvert, et la tension à l'entrée du commutateur analogique 5 devient assez élevée pour que le transistor 52 bascule et le potentiel de base du transistor 51 se trouve proche de zéro. Le transistor 51 se bloque alors, ce qui a pour effet la remise en service de la résistance 41 et donne à la fréquence de coupure du filtre passe-bas 4 une valeur assez faible pour filtrer les variations parasites rapides, liées aux mouvements du véhicule lors de son déplacement, du niveau du carburant dans le réservoir, et transmettre les variations lentes représentatives de la quantité de carburant présente dans le réservoir.

Lorsque la tension de sortie du filtre 4 est en dessous du seuil du détecteur de seuil 7, le dispositif d'alarme 8 se déclenche, avertissant le conducteur que le niveau dans le réservoir s'approche de zéro.

Naturellement, la présente demande n'est pas limitée au mode de réalisation qui vient d'être décrit. C'est ainsi que, par exemple, que tout capteur connu d'une grandeur physique à indiquer, à grandeur de sortie électrique, peut être utilisé à la place du capteur 1 décrit.

De même, tout dispositif d'affichage, en particulier du type à caractères alphanumériques, peut être utilisé à la place du dispositif d'affichage 3. Le transistor bipolaire 51 pourrait être remplacé par un transistor à effet de champ, ou encore par un relais, par exemple.

## Revendications

1.- Indicateur de bord pour véhicule, permettant le contrôle des variations lentes d'une grandeur physique affectée de variations parasites rapides, comprenant un capteur (2) de ladite grandeur physique, à grandeur de sortie électrique, des moyens (3) reliés audit capteur, pour afficher ladite grandeur de sortie et des moyens pour amortir les variations parasites de l'indication ainsi obtenue de ladite grandeur physique, caractérisé par le fait que lesdits moyens d'amortissement comprennent un filtre électrique passe-bas (4), disposé entre ledit capteur (2) et lesdits moyens d'affichage (3), et des moyens (5), commandés pendant une durée déterminée après la mise sous tension du véhicule, pour augmenter la fréquence de coupure dudit filtre (4).

2.- Indicateur selon la revendication 1, dans lequel ledit filtre électrique passe-bas (4) comprend une résistance (41) et un condensateur (42), et lesdits moyens pour augmenter la fréquence de coupure dudit filtre (4) comprennent un commutateur analogique (5), monté en parallèle sur la résistance (41) et commandé pendant une durée déterminée après la mise sous tension du véhicule, pour mettre la résistance (41) en court-circuit.

3.- Indicateur selon la revendication 2, dans lequel ledit commutateur analogique (5) comprend un transistor (51).

4.- Indicateur selon l'une des revendications 2 et 3, dans lequel le véhicule est pourvu d'une borne (1) alimentée en énergie électrique- après la mise sous tension du véhicule, il est prévu un temporisateur (61,62) relié à ladite borne (1), et ledit commutateur analogique (5) est commandé par la sortie dudit temporisateur.

5.- Indicateur selon l'une des revendications 2 et 3, dans lequel le véhicule est pourvu d'un moteur lubrifié par huile et un contacteur (64) est commandé, de façon connue, par un manomètre de pression d'huile pour fermer un circuit électrique (1,63,64) pendant une durée déterminée après la mise sous tension du véhicule, et ledit commutateur analogique (5) est commandé par ledit contacteur (64).

6.- Indicateur selon l'une des revendications 1 à 5, dans lequel il est prévu un détecteur de seuil (7) relié à la sortie dudit filtre passe-base (4), et un dispositif d'alarme (8) relié à la sortie dudit détecteur de seuil (7).

## Claims

1. On board indicator for vehicles, for checking the slow variations of a physical magnitude affected with rapid parasite variation, including a sensor (2) of said physical magnitude, with electric output magnitude, means (3) connected to said sensor for displaying said output magnitude and means for damping the parasite variations of the indication thus obtained of said physical magnitude, wherein said damping means include an electric low pass filter (4) disposed between said sensor (2) and said display means (3) and means (5), controlled for a given time after switch on of the vehicle, for increasing the cut off frequency of said filter (4).

2. Indicator as claimed in claim 1, wherein said electric low pass filter (4) includes a resistor (41) and a capacitor (42), and said means for increasing the cut off frequency of said filter (4) include an analog switch (5) connected in parallel across the resistor (41) and controlled for a given time after switch on of the vehicle for short circuiting said resistor (41).

3. Indicator as claimed in claim 2, wherein said analog switch (5) includes a transistor (51).

4.. Indicator as claimed in one of claims 2 and 3, wherein the vehicle is provided with a terminal (1) supplied with electric energy after switch on of the vehicle, a timer (61, 62) being provided connected to said terminal (1) and said analog switch (5) being controlled by the output of said timer.

5. Indicator as claimed in one of claims 2 and 3, wherein the vehicle is provided with a motor lubricated by oil and a contactor (64) is controlled, in a way known per se, by an oil pressure gauge for closing an electric circuit (1, 63, 64) for a given time after switch on of the vehicle and said analog switch (5) is controlled by said contactor (64).

6. Indicator as claimed in one of claims 1 to 5, wherein a threshold detector (7) is provided connected to the output of said low pass filter (4) and an alarm device (8) is connected to the output of said threshold detector (7).

## Patentansprüche

1. Instrumentenbrett-Anzeigeinstrument für Fahrzeuge zur Kontrolle der langsamen Schwankungen einer von raschen Störungsschwankungen betroffenen physikalischen Größe, bestehend aus einem Aufnehmer (2) der genannten physikalischen Größe, mit elektrischer Ausgangsgröße, aus mit dem genannten Aufnehmer verbundenen Vorrichtungen (3) zum Anzeigen der genannten Ausgangsgröße und aus Vorrichtung zum Dämpfen der Störungsschwankungen der Anzeige der genannten physikalischen Größe, dadurch gekennzeichnet, daß die genannten Dämpfungsvorrichtungen einen zwischen dem genannten Aufnehmer (2) und den genannten Anzeigevorrichtungen (3) angeordneten elektrischen Tiefpaßfilter (4) und Vorrichtungen zur Erhöhung der Grenzfrequenz des genannten Filters (4) umfassen, welche während einer bestimmten Dauer nach Unterspannnungsetzen des Fahrzeuges betätigt werden.

2. Anzeigeinstrument gemäß Anspruch 1, bei welchem der genannte elektrische Tiefpaßfilter (4) einen Widerstand (41) und einen Kondensator (42) enthält und die genannten Vorrichtungen zur Erhöhung der Grenzfrequenz des genannten Filters (4) einen Analogschalter (5) beinhalten, welcher parallel zum Widerstand (41) geschaltet ist und während einer bestimmten Dauer nach Unterspannungsetzen des Fahrzeuges bestätigt wird, um den Widerstand (41) kurzzuschließen.

3. Anzeigeinstrument gemäß Anspruch 2, bei welchem der genannte Analogschalter (5) einen Transistor (51) umfaßt.

4. Anzeigeinstrument gemäß einem der Ansprüche 2 und 3, bei welchem das Fahrzeug mit einer Klemme (1) ausgerüstet ist, welche nach Unterspannungsetzen des Fahrzeugs mit elektrischer Energie gespeist wird, bei welchem ein mit der genannten Klemme (1) verbundenes Zeitrelais (61, 62) vorgesehen ist und bei welchem der genannte Analogschalter (5) vom Ausgang des genannten Zeitrelais gesteuert wird.

5. Anzeigeinstrument gemäß einem der Ansprüche 2 und 3, bei welchem das Fahrzeug mit einem Motor mit Ölschmierung ausgerüstet ist und bei welchem ein Schütz (54) in der bekannten Weise von einem Öldruckmanometer betätigt wird, um während einer bestimmten Dauer nach Unterspannungsetzen des Fahrzeuges einen elektrischen Stromkreis (1, 63, 64) zu schließen, und wobei der genannte Analogschalter (5) von dem genannten Schütz (64) gesteuert wird.

6. Anzeigeinstrument gemäß einem der Ansprüche 1 bis 5, bei welchem ein mit dem Ausgang des genannten Tiefpaßfilters (4) verbundener Schwellenwertdetektor (7) vorgesehen ist und eine mit dem Ausgang des genannten Schwellenwertdetektors verbundene Alarmeinrichtung (8).

FIG 1

FIG 2

FIG 3

FIG.4

FIG.5

FIG.6